# FASCICULE DE BREVET EUROPEEN

(11) **EP 0 692 468 B1**
(45) Date de publication et mention de la délivrance du brevet: **11.11.1998**
(21) Numéro de dépôt: 95401660.6
(22) Date de dépôt: 10.07.1995
(51) Int. Cl.: C05G 3/00, B01J 2/30, B01J 2/00

(54) **Procédé de traitement d'engrais pour lutter contre la reprise d'humidité**
Verfahren zur Behandlung von Düngemitteln zur Verminderung der Wasseraufnahme
Process for the treatment of fertilisers to avoid moisture pick-up

(30) Priorité: 13.07.1994 FR 9408740
(43) Date de publication de la demande: 17.01.1996
(73) Titulaire: CFPI INDUSTRIES, 92233 Gennevilliers (FR)
(72) Inventeur: Schapira, Joseph, F-75015 Paris (FR); Cheminaud, Jean-Claude, F-95220 Herblay (FR); Petitbon, Pascal, F-95130 Franconville (FR); Imbert, Dominique, F-92400 Courbevoie (FR)
(74) Mandataire: Koch, Gustave

(56) Documents cités:
- EP-A- 0 202 753
- EP-A- 0 320 987
- EP-A- 0 341 102
- EP-A- 0 574 306
- FR-A- 2 460 706
- US-A- 3 926 841
- DATABASE WPI Derwent Publications Ltd., London, GB; AN 86-065685 & JP-A-61 017 486 (KAO CORP.) , 25 Janvier 1986
- NITROGEN, no. 187, 1990 LONDON GB, pages 20-27, 'The latest in fertilizer cake prevention'

## Description

L'invention a pour objet un procédé de traitement d'engrais, du genre de ceux qui sont à base de nitrate d'ammonium et qui contiennent du nitrate de magnésium et de ceux qui sont à base de nitrate de calcium, pour lutter contre la reprise d'humidité par ces engrais.

Elle vise également l'utilisation, en tant qu'agent actif, du produit dont la mise en oeuvre caractérise le susdit procédé.

Les engrais à base de nitrate d'ammonium et qui contiennent du nitrate de magnésium à une proportion qui est généralement d'environ 1,5 à 2% en poids par rapport au nitrate d'ammonium, ont un taux d'azote supérieur à 15, généralement de 27 à 33,5% en poids et peuvent contenir des carbonates et sulfates minéraux, notamment de calcium, ainsi que des charges inertes choisies dans le groupe comprenant les argiles, la dolomie et autres, ces additifs permettant notamment de régler le taux d'azote de ces engrais et de faciliter leur fabrication. Lorsque ces engrais contiennent du carbonate de calcium, leur taux d'azote est généralement de 25 à 27,5% en poids.

Pour la fabrication des engrais à base de nitrate d'ammonium contenant du nitrate de magnésium, on peut avoir recours aux techniques décrites dans l'article "Fluid bed granulation of ammonium nitrate and calcium ammonium nitrate" présenté par J.P. Bruynseels à la "The Fertiliser Society of London" le 18 avril 1985.

Grâce à la présence du nitrate de magnésium, les engrais à base de nitrate d'ammonium ne mottent pas, apparemment en raison des phénomènes dont ils sont le siège et qui ont été décrits par Edward J. Griffith dans l'article "Phase transitions of ammonium nitrate, Magnesium Nitrate system" paru dans J. Chem. Eng. Data, 1963,8(1),22-25.

De même, les engrais à base de nitrate de calcium, qui ont un taux d'azote généralement de 15 à 16%, ne présentent pas de tendance au mottage.

Toutefois, tant les engrais à base de nitrate d'ammonium et qui contiennent du nitrate de magnésium que les engrais à base de nitrate de calcium présentent un inconvénient très préjudiciable à leur conservation lors de leur stockage en vrac en atmosphère humide sous forme de granules; cet inconvénient se manifeste par une tendance marquée à la reprise d'humidité; cette tendance serait essentiellement due à la formation du complexe Mg(N0₃)₂,6H₂0 dans le cas des engrais à base de nitrate d'ammonium et à la formation de Ca(NO₃)₂,2H₂0 dans le cas des engrais à base de nitrate de calcium; dans les deux cas, l'apparition de l'hydrate provoquerait notamment une dégranulation.

L'invention a donc pour but, surtout, de remédier à cet inconvénient et de mettre à la disposition de l'industriel des moyens propres à lutter contre la reprise d'humidité en question.

Et ce but a pu être atteint grâce aux travaux de la Société Demanderesse qui a eu le mérite de trouver que le traitement des engrais du genre en question, présentés notamment sous la forme de granules, par une quantité efficace du produit de la réaction d'un alcool ou d'une amine avec un acide ou anhydride carboxylique portant un groupe hydrocarboné ayant de 20 à 500 atomes de carbone, ledit produit étant appliqué de préférence sous la forme d'une composition huileuse ou cireuse, permettait, de façon surprenante et inattendue, d'améliorer d'une manière décisive la tenue desdits engrais en cas de stockage en vrac en atmosphère humide.

Le produit en question qui est en lui-même connu, a été proposé comme agent antimottant par la demande de brevet européen N° 0 202 753 qui le décrit comme conférant à des matériaux sous forme de particules présentant une tendance au mottage, un enrobage antimottant dont la surface extérieure est, comme celle des enrobages antimottants obtenus par traitement avec les amines grasses ou avec des alkylarylsulfonates, de nature lipophile, autrement dit hydrophobe.

Or, il est bien connu de l'homme du métier que ces enrobages antimottants à surface extérieure lipophile classiquement obtenus par traitement des particules à antimotter avec des amines grasses ou avec des alkylarylsulfonates, ne confèrent pas à ces particules une résistance suffisante à la reprise d'humidité.

L'homme du métier n'était donc nullement incité à rechercher une telle propriété dans le cas de la famille d'agents antimottants constitués par les produits définis plus haut, ce qui explique le caractère inattendu et surprenant du résultat des recherches de la Société Demanderesse.

Il s'ensuit que le procédé conforme à l'invention de traitement des engrais du genre en question, en vue de lutter contre leur tendance à la reprise d'humidité, est caractérisé par le fait que l'on applique sur les particules ou granules constitutifs dudit engrais, une composition d'enrobage comprenant, d'une part, en tant que matière active, le produit de la réaction d'un alcool ou d'une amine avec un acide ou anhydride carboxylique portant un groupe hydrocarboné ayant de 20 à 500 atomes de carbone et, d'autre part, un agent de formulation constitué de préférence par un produit huileux ou cireux.

Un autre aspect de l'invention réside dans l'utilisation, à titre d'agent propre à lutter contre la reprise d'humidité des engrais du genre en question, du produit de la réaction d'un alcool ou d'une amine avec un acide ou anhydride carboxylique portant un groupe hydrocarboné ayant de 20 à 500 atomes de carbone.

Selon un mode de réalisation avantageux du susdit procédé, le produit constituant la matière active est le résultat de la réaction d'un alcool, d'une amine ou d'une alcanolamine, avec un acide carboxylique du groupe comprenant les acides acryliques, fumarique, maléique et succinique ou leurs anhydrides, cet acide ou anhydride portant un groupe hydrocarboné principalement constitué de groupes alkyle ou alkényle, le groupe isobutyle étant particulièrement préféré.

Selon un autre mode de réalisation avantageux du susdit procédé, le produit constituant la matière active est le résultat de la réaction d'un alcool, d'une amine ou d'une alcanolamine avec un acide polyalkényl-succinique ou son anhydride et, de préférence, l'acide polyisobuténylsuccinique également connu sous l'appellation PIBSA (abréviation de la désignation de ce produit en anglais, à savoir "Poly-Isobutenyl-Succinic Acid").

Les acides polyalkényl-succiniques peuvent être représentés par les formules suivantes: 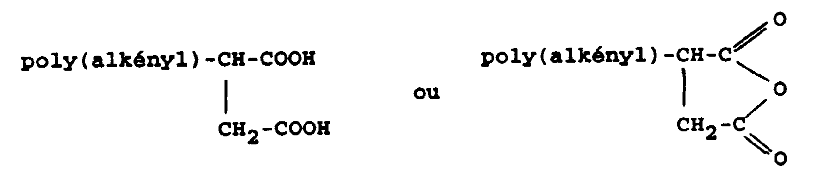 et sont décrits dans le brevet U.S. N° 4.329.249.

Selon un autre mode de réalisation avantageux du procédé selon l'invention, l'agent de formulation est choisi dans le groupe comprenant les huiles minérales, les cires de paraffine ainsi que les mélanges de ces produits et plus particulièrement les cires de paraffine dont le point de fusion est de 48 à 80°C et les huiles minérales dont les viscosités cinématiques sont de 20 à 800 mm²/s, de préférence de 20 à 150 mm²/s à 40°C.

Selon un autre mode de réalisation avantageux du procédé selon l'invention, la composition d'enrobage comprend de 0,1 à 10%, de préférence de 0,5 à 8%, plus préférentiellement de 1 à 7% et, plus préférentiellement encore, de 2 à 5% en poids du produit constituant la matière active.

Cette composition d'enrobage peut comprendre de 90 à 99,9% en poids du susdit agent de formulation.

Selon un autre mode de réalisation avantageux du susdit procédé, la composition d'enrobage est appliquée à raison de 300 à 1000 ppm, de préférence de 400 à 800 ppm par rapport à l'engrais.

L'application peut être réalisée par pulvérisation à une température à laquelle la composition d'enrobage est liquide et facilement pulvérisable, cette température étant généralement de 55 à 80°C.

La pulvérisation peut être effectuée dans un tambour d'enrobage ou sur une bande transporteuse d'engrais.

L'invention pourra être mieux comprise à l'aide des exemples non limitatifs qui suivent et dans lesquels sont décrits des modes de réalisation avantageux de l'invention en comparaison avec des solutions proposées par l'art antérieur.

### EXEMPLE 1

On a procédé à des essais comparatifs sur un engrais constitué par du nitrate d'ammonium contenant 1,6% en poids de nitrage de magnésium.

Les essais en question consistent à soumettre à un test de mottage ainsi qu'à un test de reprise d'humidité en atmosphère contrôlée trois échantillons de 20 kg du susdit engrais préalablement traité respectivement par 800 ppm (autrement dit 800 g/tonne d'engrais) de chacune des compositions d'enrobage A à C décrites ci-dessous; le traitement revient donc à appliquer par pulvérisation 12 g de chacune de ces compositions à respectivement chacun des échantillons d'engrais.

Pour pouvoir être aisément pulvérisées, les compositions A à C sont portées à 80°C; l'engrais se trouve, quant à lui, à 30°C.

Les compositions A à C sont constitutées comme suit:

### Composition A

Tensio-actif antimottant constitué par une base huileuse contenant une amine grasse; il s'agit du produit commercialisé sous la marque LILAMIN AC 81 L par la Société KENOBEL.

### Composition B

Tensio-actif antimottant commercialisé sous la marque GALORYL^{O} ATH 632M par la société Demanderesse et correspondant aux compositions décrites dans le brevet européen EP 341 102.

### Composition C

Composition d'enrobage utilisée conformément à l'invention et constituée de:
- 3% en poids d'un sel d'amine d'un dérivé PIBSA
- 45% en poids d'une huile minérale "type 100 Neutral"
- 52% en poids d'une cire de point de goutte de 60°C.

### Test de mottaae

Ce test est réalisé sur quatre échantillons de 10 kg d'engrais chacun, le premier n'ayant subi aucun traitement et les trois autres ayant été traités comme indiqué ci-dessus respectivement par chacune des compositions A à C.

Les quatre échantillons sont conditionnés chacun dans un sac de polyéthylène; ces sacs sont placés à une température de 25°C sous une charge telle qu'ils subissent une pression de 0,8 kg/cm², ce qui simule un stockage d'une pile d'engrais d'environ 12 mètres de hauteur.

Cette pression est maintenue pendant 7 jours à l'issue desquels les sacs sont ouverts et examinés.

Les résultats enregistrés à l'issue du test de mottage sont réunis dans le tableau I.

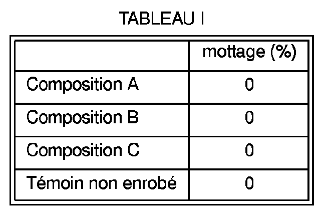

Les résultats réunis dans le tableau 1 montrent qu'un nitrate d'ammonium contenant du nitrate de magnésium ne motte pas lorsqu'il subit le même test de mottage, qu'il soit ou non enrobé des compositions A, B ou C.

### Test de reprise d'humidité

Deux types de tests de reprise d'humidité sont effectués.

Le premier est un test rapide consistant à disposer une couche de granules d'engrais dans un cristallisoir de 6 cm de diamètre, qui est placé dans une enceinte climatique reproduisant les conditions suivantes:
Humidité relative : 75%
Température : 30°C;

on mesure la quantité d'eau reprise après 24 heures; le résultat est exprimé en pourcentage en poids d'eau reprise.

Le second test consiste à disposer 600 g d'engrais dans un bêcher de 800 ml, puis à placer ce bêcher dans une enceinte climatique reproduisant les conditions suivantes:
Humidité relative : 75%
Température : 30°C.

On observe la pénétration de l'eau dans le volume de nitrate d'ammonium (observation qualitative) et on mesure le pourcentage en poids d'eau absorbée après 90 heures.

La pénétration est évaluée en notant le nombre de "stalactites" ou "chandelles" observées.

Les résultats du test de reprise d'humidité sont réunis dans le tableau II.

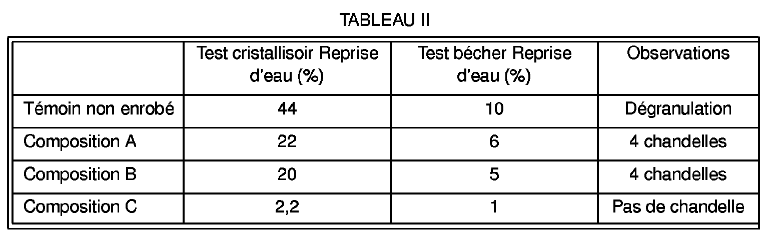

Ces résultats montrent la supériorité dans la lutte contre la reprise d'eau des compositions selon l'invention. De plus, ils montrent que les antimottants classiques (compositions A et B) ne confèrent qu'une protection insuffisante contre la reprise d'humidité en dépit du fait que la couche d'enrobage à laquelle ils conduisent a une surface extérieure hydrophobe.

### EXEMPLE 2

On a procédé à des essais comparatifs montrant que la performance antimottante d'une composition n'est pas corrélée à la protection contre la reprise d'humidité.

Dans le cadre de ces essais, on a appliqué les trois compositions A, B et C sur un engrais constitué par du nitrate d'ammonium 33,5% ne contenant pas de nitrate de magnésium; un tel engrais est connu pour sa tendance élevée à prendre en masse.

Le test de mottage est réalisé de la manière indiquée à l'exemple 1.

Comme à l'exemple 1, les échantillons d'engrais traité ou non sont conditionnés dans des sacs de polyéthylène.

A l'issue du test, les sacs sont ouverts, les mottes sont pesées et leur dureté mesurée à l'aide d'un dynamomètre.

La dureté mesurée est exprimée en kg.

On détermine également le pourcentage de mottage, c'est-à-dire le pourcentage en poids des mottes formées par rapport au poids de l'engrais.

On détermine enfin l'indice de mottage IM qui est le produit du pourcentage de mottage par la moyenne de la dureté des mottes.

Les résultats sont réunis dans le tableau III.

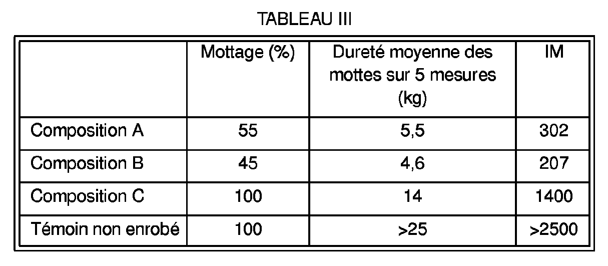

L'examen des résultats réunis dans ce tableau montre que la composition utilisée conformément à l'invention donne des résultats nettement inférieurs à ceux obtenus avec les antimottants classiques.

Une bonne efficacité antimottante constatée pour un produit donné ne signifie donc pas que ce produit permet de lutter efficacement contre la reprise d'humidité.

### EXEMPLE 3

On a procédé à un ensemble d'essais visant à déterminer la quantité optimale de composition utilisée conformément à l'invention devant être mise en oeuvre.

Pour ce faire, on a appliqué sur des échantillons de l'engrais étudié à l'exemple 1, des quantités croissantes du produit mis en oeuvre conformément à l'invention.

En d'autres termes, on a appliqué dans les conditions de l'exemple 1 respectivement 800 ppm de chacune des compositions E, F, C, G et H.

Les compositions E à H contiennent respectivement 1, 2, 3, 4 et 5% en poids du sel d'amine de PIBSA défini à l'exemple 1.

La constitution des compositions E à H résulte du tableau IV ci-après.

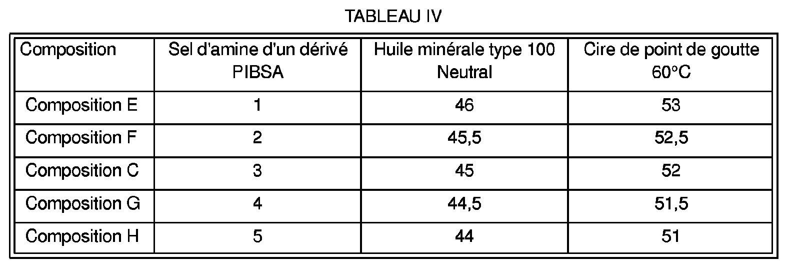

Les échantillons d'engrais traités par les compositions E à H sont soumis aux deux tests de reprise d'humidité décrits à l'exemple 1.

Les résultats enregistrés à l'issue de ces tests sont réunis dans le tableau V.

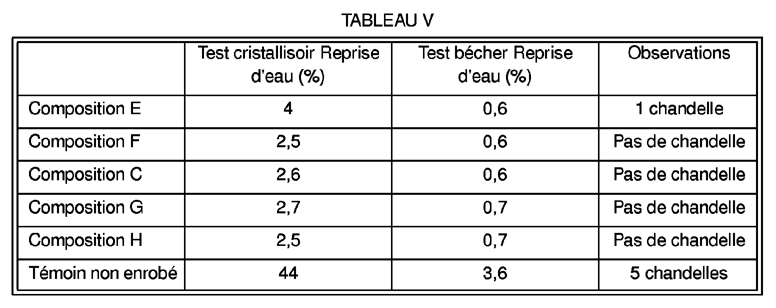

L'examen de ces résultats montre que, pour obtenir des résultats satisfaisants, il importe de mettre en oeuvre des compositions d'enrobage contenant de préférence au moins 2% du produit utilisé conformément à l'invention.

### EXEMPLE 4

Dans cet exemple, on a procédé à des essais visant à déterminer l'influence sur la protection contre la reprise d'humidité de la proportion par rapport à la masse d'engrais de la composition mise en oeuvre dans le procédé selon l'invention.

On a donc soumis aux essais de reprise d'humidité, dans les conditions de l'exemple 1, quatre échantillons du même engrais dont le premier n'a pas été traité conformément à l'invention alors que les trois autres ont été soumis au traitement par la composition C respectivement à la proportion de 900, 650 et 400 pm.

Les résultats enregistrés et observés sont réunis dans le tableau VI.

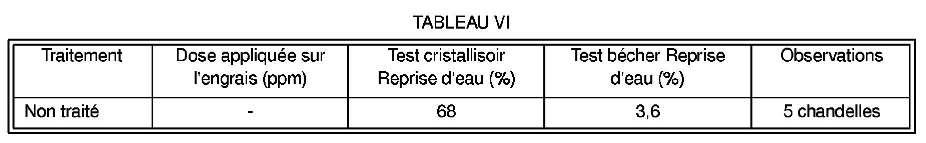

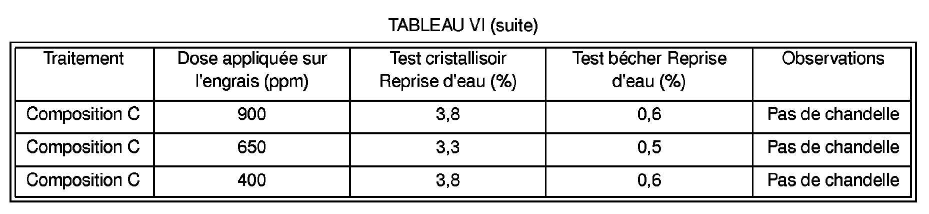

A l'examen des résultats réunis dans le tableau VI, il apparaît qu'une proportion de composition utilisée conformément à l'invention, de préférence supérieure à 400 ppm, confère une protection satisfaisante contre la reprise d'humidité.

### EXEMPLE 5

Dans cet exemple, on a procédé à des essais visant à montrer l'efficacité d'une composition selon l'invention sur un engrais constitué de nitrate de calcium granulé.

On a appliqué par pulvérisation 800 ppm de la composition C décrite dans l'exemple 1 à un échantillon de 20 kg du susdit engrais et comparé son comportement dans les deux tests de reprise d'humidité décrits à l'exemple 1, à celui d'un échantillon de 20 kg de nitrate de calcium non traité.

Les deux tests sont réalisés dans les mêmes conditions que dans l'exemple 1, à la différence près que la température est de 25°C.

Les résultats sont réunis dans le tableau VII.

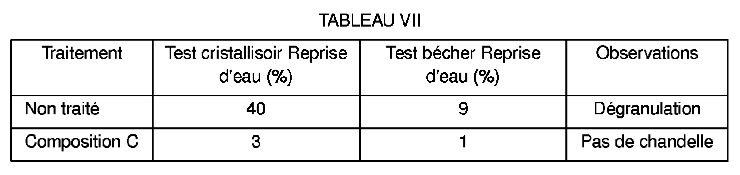

L'examen de ces résultats montre l'efficacité d'une composition selon l'invention dans le cas du traitement d'un engrais constitué de nitrate de calcium.

## Revendications

1. Procédé de traitement d'engrais à base de nitrate d'ammonium et contenant du nitrate de magnésium et d'engrais à base de nitrate de calcium pour lutter contre la reprise d'humidité par ces engrais, caractérisé par le fait que l'on applique sur les particules ou granules constitutifs dudit engrais, une composition d'enrobage comprenant, d'une part, en tant que matière active, le produit de la réaction d'un alcool ou d'une amine avec un acide ou anhydride carboxylique portant un groupe hydrocarboné ayant de 20 à 500 atomes de carbone et, d'autre part, un agent de formulation constitué de préférence par un produit huileux ou cireux.

2. Procédé selon la revendication 1, caractérisé par le fait que le produit constituant la matière active est le résultat de la réaction d'un alcool, d'une amine ou d'une alcanolamine, avec un acide carboxylique du groupe comprenant les acides acryliques, fumarique, maléique et succinique ou leurs anhydrides, cet acide ou anhydride portant un groupe hydrocarboné principalement constitué de groupes alkyle ou alkényle, le groupe isobutyle étant particulièrement préféré.

3. Procédé selon l'une des revendications 1 et 2, caractérisé par le fait que le produit constituant la matière active est le résultat de la réaction d'un alcool, d'une amine ou d'une alcanolamine avec un acide polyalkényl-succinique ou son anhydride et, de préférence, l'acide polyisobutényl-succinique également connu sous l'appellation PIBSA.

4. Procédé selon l'une des revendications 1 à 3, caractérisé par le fait que l'agent de formulation est choisi dans le groupe comprenant les huiles minérales, les cires de paraffine ainsi que les mélanges de ces produits et plus particulièrement les cires de paraffine dont le point de fusion est de 48 à 80°C et les huiles minérales dont les viscosités cinématiques sont de 20 à 800 mm²/s, de préférence de 20 à 150 mm²/s à 40°C.

5. Procédé selon l'une des revendications 1 à 4, caractérisé par le fait que la composition d'enrobage comprend de 0,1 à 10%, de préférence de 0,5 à 8%, plus préférentiellement de 1 à 7% et, plus préférentiellement encore, de 2 à 5% en poids du produit constituant la matière active.

6. Procédé selon l'une des revendications 1 à 5, caractérisé par le fait que la composition d'enrobage est appliquée à raison de 300 à 1000 ppm, de préférence de 400 à 800 ppm par rapport à l'engrais.

7. Procédé selon l'une des revendications 1 à 3, caractérisé par le fait que l'application est effectuée par pulvérisation à une température à laquelle la composition d'enrobage est liquide et facilement pulvérisable, cette température étant généralement de 55 à 80°C.

8. Utilisation, à titre d'agent propre à lutter contre la reprise d'humidité des engrais à base de nitrate d'ammonium et contenant du nitrate de magnésium ainsi que des engrais à base de nitrate de calcium, du produit de la réaction d'un alcool ou d'une amine avec un acide ou anhydride carboxylique portant un groupe hydrocarboné ayant de 20 à 500 atomes de carbone.

## Claims

1. Process for the treatment of ammonium nitrate-based fertilizer containing magnesium nitrate and of calcium nitrate-based fertilizer for combating moisture uptake by these fertilizers, characterized by the fact that there is applied to the constituent particles or granules of the said fertilizer a coating composition comprising, on the one hand, as active material, the product of the reaction of an alcohol or an amine with a carboxylic acid or anhydride comprising a hydrocarbon group having from 20 to 500 carbon atoms and, on the other hand, a formulation agent consisting preferably of an oily or waxy product.

2. Process according to Claim 1, characterized by the fact that the product constituting the active material is the result of the reaction of an alcohol, an amine or an alkanolamine with a carboxylic acid from the group comprising acrylic acid, fumaric acid, maleic acid and succinic acid or the anhydrides thereof, this acid or anhydride comprising a hydrocarbon group mainly consisting of alkyl or alkenyl groups, the isobutyl group being particularly preferred.

3. Process according to one of Claims 1 and 2, characterized by the fact that the product constituting the active material is the result of the reaction of an alcohol, an amine or an alkanolamine with a polyalkenyl-succinic acid or the anhydride thereof and, preferably, with polyisobutenyl-succinic acid also known under the name PIBSA.

4. Process according to one of Claims 1 to 3, characterized by the fact that the formulation agent is selected from the group comprising mineral oils, paraffin waxes and mixtures of these products and more particularly paraffin waxes whose melting point is from 48 to 80°C and mineral oils whose kinematic viscosities are from 20 to 800 mm²/s, preferably from 20 to 150 mm²/s, at 40_{°}C.

5. Process according to one of Claims 1 to 4, characterized by the fact that the coating composition comprises from 0.1 to 10%, preferably from 0.5 to 8%, more preferably from 1 to 7% and, even more preferably, from 2 to 5% by weight of the product constituting the active material.

6. Process according to one of Claims 1 to 5, characterized by the fact that the coating composition is used at a rate of 300 to 1000 ppm, preferably of 400 to 800 ppm with respect to the fertilizer.

7. Process according to one of Claims 1 to 3, characterized by the fact that the application is carried out by spraying at a temperature at which the coating composition is liquid and easily sprayable, this temperature generally being from 55 to 80°C.

8. Use, as agent capable of combating the moisture uptake of ammonium nitrate-based fertilizers containing magnesium nitrate as well as of calcium nitrate-based fertilizers, of the product of the reaction of an alcohol or an amine with a carboxylic acid or anhydride comprising a hydrocarbon group having from 20 to 500 carbon atoms.

## Patentansprüche

1. Verfahren zur Behandlung von Magnesiumnitrat-haltigem Düngemittel auf Ammoniumnitrat-Basis und von Düngemittel auf Calciumnitrat-Basis zur Verminderung der Feuchtigkeitsaufnahme durch diese Düngemittel, dadurch gekennzeichnet, daß man auf die Partikel oder Körnchen, die das Düngemittel bilden, eine Beschichtungszusammensetzung aufbringt, welche einerseits als Wirkstoff das Reaktionsprodukt eines Alkohols oder Amins mit einer Carbonsaure oder einem Carbonsäureanhydrid, die bzw. das eine Kohlenwasserstoffgruppe mit 20 bis 500 Kohlenstoffatomen aufweist, und andererseits ein Formulierungsmittel, das bevorzugt aus einem öligen oder wachsartigen Produkt besteht, umfaßt.

2. Verfahren nach Anspruch 1, dadurch gekennzeichnet, daß das Produkt, das den Wirkstoff bildet, das Resultat ist der Reaktion eines Alkohols, eines Amins oder eines Alkanolamins mit einer Carbonsäure aus der Gruppe, umfassend die Acrylsäuren, Fumarsäure, Maleinsäure und Succinsäure oder deren Anhydride, wobei die Säure oder das Anhydrid eine im wesentlichen aus Alkyl- oder Alkenylgruppen bestehende Kohlenwasserstoffgruppe aufweist, wobei die Isobutylgruppe besonders bevorzugt ist.

3. Verfahren nach einem der Ansprüche 1 und 2, dadurch gekennzeichnet, daß das Produkt, das den Wirkstoff bildet, das Resultat der Reaktion eines Alkohols, eines Amins oder eines Alkanolamins mit einer Polyalkenylsuccinsäure oder ihrem Anhydrid, und besonders bevorzugt Polyisobutenylsuccinsäure, auch bekannt unter der Bezeichnung PIBSA, ist.

4. Verfahren nach einem der Ansprüche 1 bis 3, dadurch gekennzeichnet, daß das Formulierungsmittel ausgewählt wird aus der Gruppe umfassend die Mineralöle, die Paraffinwachse sowie die Gemische dieser Produkte, und insbesondere die Paraffinwachse mit einem Erweichungspunkt von 48 bis 80°C und die Mineralöle mit einem Viskositäts-Dichteverhältnis von 20 bis 800 mm²/s, bevorzugt von 20 bis 150 mm²/s bei 40°C.

5. Verfahren nach einem der Ansprüche 1 bis 4, dadurch gekennzeichnet, daß die Beschichtungszusammensetzung von 0,1 bis 10%, bevorzugt von 0,5 bis 8%, stärker bevorzugt von 1 bis 7% und noch stärker bevorzugt von 2 bis 5% des Produkts, das den Wirkstoff bildet, umfaßt.

6. Verfahren nach einem der Ansprüche 1 bis 5, dadurch gekennzeichnet, daß die Beschichtungszusammensetzung in einer Menge von 300 bis 1000 ppm, bevorzugt von 400 bis 800 ppm bezogen auf das Düngemittel aufgebracht wird.

7. Verfahren nach einem der Ansprüche 1 bis 3, dadurch gekennzeichnet, daß das Aufbringen bewirkt wird durch Zerstäuben bei einer Temperatur, bei der die Beschichtungszusammensetzung flüssig und leicht zerstäubbar ist, wobei diese Temperatur im allgemeinen 55 bis 80°C beträgt.

8. Verwendung des Reaktionsprodukts eines Alkohols oder eines Amins mit einer Carbonsäure oder einem Carbonsäureanhydrid, die bzw. das eine Kohlenwasserstoffgruppe mit 20 bis 500 Kohlenstoffatomen aufweist, als Mittel zur Verminderung der Feuchtigkeitsaufnahme von Magnesiumnitrat-haltigem Düngemittel auf Ammoniumnitrat-Basis und von Düngemittel auf Calciumnitrat-Basis.
